# DEMANDE DE BREVET EUROPEEN

(11) **EP 4 803 731 A1**
(43) Date de publication de la demande: **09.09.2026**
(21) Numéro de dépôt: 26157774.6
(22) Date de dépôt: 11.02.2026
(51) Int. Cl.: F02C 6/18, F01D 15/10, F01D 25/18, F02C 7/06, F02C 7/08, B60K 6/00

(54) **AMELIORATION D'UN SYSTEME DE TURBOGENERATEUR, NOTAMMENT AUTOMOBILE, PAR INTEGRATION DE DESHUILEUR**

(30) Priorité: 06.03.2025 FR 2502264
(71) Demandeur: Stellantis Auto SAS, 78300 Poissy (FR)
(72) Inventeur: TESSIER, JULIEN, 78700 CONFLANS STE HONORINE (FR); JAINE, THIERRY, 78500 SARTROUVILLE (FR); BOURIOT, JEAN, 45400 FLEURY LES AUBRAIS (FR); DERANLOT, CHRISTOPHE, 78380 BOUGIVAL (FR); BOU NADER, WISSAM, 91120 PALAISEAU (FR)
(74) Mandataire: PSIP

(57) **Abrégé**

Dispositif de transformation d'énergie (1000) avec un turbogénérateur (100) comportant une turbomachine (110) dont un compresseur (4) recevant un flux gazeux amont, entraîné par une turbine (6) via un arbre (20) lubrifié par un circuit de lubrification (200), envoie, via un récupérateur (1), un flux gazeux comprimé vers une chambre de combustion (3) alimentant la turbine (6), le circuit de lubrification (200) comportant un réservoir de lubrifiant (8) dont une pompe (7) achemine le contenu vers un palier avant (21) de support dudit arbre (20) au niveau du compresseur (4) et vers un palier arrière (22) de support dudit arbre (20) au niveau de la turbine (6), avant son retour par une pompe de retour (9) au réservoir (8), le turbogénérateur (100) comportant un déshuileur (2) entre le compresseur (4) et la chambre de combustion (3), et véhicule automobile comportant ce dispositif (1000).

## Description

L'invention porte sur un dispositif autonome de transformation d'énergie comportant au moins un turbogénérateur à turbine à gaz, ledit au moins un turbogénérateur comportant au moins une première turbomachine.

L'invention concerne encore un véhicule automobile électrique comportant un tel dispositif autonome de transformation d'énergie.

L'invention concerne l'optimisation des chaînes de traction, et en particulier des turbogénérateurs, notamment pour les applications automobiles.

Actuellement, les constructeurs de véhicules automobiles, en particulier hybrides ou électriques, s'efforcent de mettre en œuvre des convertisseurs d'énergie comme systèmes de prolongation d'autonomie («range extender» en anglais) basés essentiellement sur au moins un étage de suralimentation mettant en œuvre une turbomachine comportant un compresseur, une chambre de combustion et une turbine.

On dénomme couramment «e-Turbo » un turbogénérateur électrique de suralimentation. Le mécanisme le plus simple à un seul étage de suralimentation utilise une génératrice à base d'une turbomachine, qui n'intègre pas de dispositif sur la turbine permettant de gérer la pression en aval du compresseur. C'est une turbine à géométrie fixe. De ce fait, les actionneurs se limitent à gérer la quantité de carburant injectée, la quantité de chaleur produite par effet Joule avec la résistance électrique dans le catalyseur, et la vitesse de rotation de la machine électrique sur l'arbre du turbogénérateur.

Un système plus élaboré comporte deux étages de suralimentation réalisés avec deux turbomachines, un étage basse pression et un étage haute pression (où la pression est supérieure à celle de l'étage basse pression), comportant chacune une turbine à géométrie variable, ainsi que deux chambres de combustion, de préférence deux chambres de combustion catalytique. Un tel système dispose également d'un catalyseur électrifié positionné en amont de la turbine basse pression.

Dans tout système de suralimentation à turbogénérateur, l'impératif de lubrification des paliers de l'arbre basse pression, respectivement haute pression le cas échéant, est capital pour la performance du système. Cette lubrification est en général réalisée à l'huile.

Un risque récurrent est l'existence d'une éventuelle fuite d'huile, notamment au niveau du compresseur, qui puisse venir polluer le circuit gazeux compresseur/chambre de combustion/turbine. Un turbogénérateur fonctionne suivant une fenêtre de vitesse fournie par son constructeur, dans laquelle fenêtre l'étanchéité statique et l'étanchéité dynamique sont assurées.

Mais il s'agit de pouvoir autoriser un fonctionnement avec des paramètres en-deçà ou au-delà de cette fenêtre constructeur. Notamment, si la pression du côté de l'air est proche de, ou inférieure à, la pression d'huile, du côté de l'arbre, il est possible de voir apparaître des fuites d'huile. Cela se traduit par l'apparition d'huile dans la veine d'air. Une telle introduction d'huile dans la veine d'air génère un risque potentiel d'apparition d'un dégagement de chaleur non contrôlé dans les chambres de combustion catalytiques. Ce risque peut s'accompagner d'un dégagement de chaleur avec une flamme. Que ce dégagement de chaleur apparaisse avec ou sans flamme, ce dégagement de chaleur non contrôlé est nocif pour le turbogénérateur et ses chambres de combustion, ainsi que pour l'installation qui intègre le turbogénérateur, notamment un véhicule automobile.

L'objectif de la présente invention est de remédier à ces inconvénients, et d'éviter toute combustion non contrôlée liée à l'apparition de fuites d'huile dans la veine d'air. A cet effet l'invention propose l'intégration d'un organe de type déshuileur dans le turbogénérateur. La position de ce déshuileur est choisie de façon à limiter son impact sur le fonctionnement du turbogénérateur, tout en assurant un retour de l'huile à son réservoir. Ce retour permet de maintenir un niveau quasi-constant dans le réservoir.

Pour atteindre cet objectif, l'invention propose un dispositif autonome de transformation d'énergie comportant au moins un turbogénérateur à turbine à gaz alimenté par un réservoir de carburant, ledit au moins un turbogénérateur comportant au moins une première turbomachine comportant un premier compresseur recevant un flux gazeux amont et entraîné par une première turbine au travers d'un premier arbre lubrifié par un circuit de lubrification et agencé pour l'entraînement d'une première machine électrique, ledit premier compresseur étant agencé pour envoyer dans un circuit gazeux, au travers d'un récupérateur de chaleur, un flux gazeux comprimé, vers une première chambre de combustion alimentant l'amont de ladite première turbine dont le flux gazeux en aval traverse ledit récupérateur de chaleur avant sa sortie dudit au moins un turbogénérateur, ledit circuit de lubrification comportant un réservoir de lubrifiant dont le contenu est acheminé par une pompe de lubrification vers un premier palier avant de support dudit premier arbre au niveau dudit premier compresseur et vers un premier palier arrière de support dudit premier arbre au niveau de ladite première turbine, puis ramené par une pompe de retour audit réservoir de lubrifiant.

Selon l'invention, ledit au moins un turbogénérateur comporte au moins un déshuileur intercalé sur ledit circuit gazeux entre ledit premier compresseur et ladite première chambre de combustion pour éliminer du lubrifiant introduit dans le flux gazeux.

Grâce à l'invention, on évite toute pollution du circuit gazeux par du lubrifiant, notamment de l'huile. Et on protège les chambres de combustion et les turbines.

Plus particulièrement, ledit au moins un turbogénérateur comporte au moins un déshuileur intercalé sur ledit circuit gazeux entre ledit premier compresseur et ledit récupérateur de chaleur.

Cette première variante est d'installation facile.

Plus particulièrement, ledit au moins un turbogénérateur comporte au moins un déshuileur intercalé sur ledit circuit gazeux entre ledit récupérateur de chaleur et ladite première chambre de combustion.

Cette deuxième variante permet de s'adapter à des conditions d'agencement plus particulières.

Plus particulièrement, ledit au moins un turbogénérateur comporte, pour l'alimentation de ladite au moins une première turbomachine en flux gazeux, au moins une deuxième turbomachine comportant un deuxième compresseur recevant un flux gazeux amont et entraîné par une deuxième turbine au travers d'un deuxième arbre lubrifié par ledit circuit de lubrification et agencé pour entraîner une deuxième machine électrique, ledit deuxième compresseur étant agencé pour envoyer dans ledit premier compresseur un flux gazeux comprimé, en ce que ledit au moins un turbogénérateur comporte, pour l'alimentation de ladite deuxième turbine, une deuxième chambre de combustion située en aval de ladite première turbine et en amont de ladite deuxième turbine, et en ce que ledit circuit de lubrification est agencé pour lubrifier, en aval de ladite pompe de lubrification, un deuxième palier avant de support dudit deuxième arbre au niveau dudit deuxième compresseur, et, en aval de ladite première turbine et de ladite deuxième chambre de combustion, un deuxième palier arrière de support dudit deuxième arbre en amont de ladite pompe de retour.

Cette exécution de turbogénérateur à deux étages garantit un très bon rendement, le premier étage étant un étage haute pression, où la pression est supérieure à celle dans le deuxième étage basse pression qui l'alimente.

Plus particulièrement, ledit circuit de lubrification comporte, sur un circuit retour en aval dudit au moins déshuileur et en amont dudit réservoir de lubrifiant, au moins un réservoir de récupération de lubrifiant situé entre deux vannes pilotées et agencé pour récupérer ledit lubrifiant par gravité sous pression.

On évite ainsi tout débordement du réservoir de lubrifiant.

Plus particulièrement, chaque chambre de combustion que comporte ledit au moins un turbogénérateur est une chambre de combustion catalytique.

Le rendement est meilleur.

Plus particulièrement, au moins un arbre d'une turbomachine que comporte ledit au moins un turbogénérateur entraîne une machine électrique agencée pour recharger un pack batterie et/ou alimenter un moteur de traction électrique.

Ainsi un appoint bienvenu est procuré dans le cas d'un véhicule électrique ou hybride.

Plus particulièrement encore, chaque arbre d'une turbomachine que comporte ledit au moins un turbogénérateur entraîne une machine électrique agencée pour recharger un pack batterie et/ou alimenter un moteur de traction électrique.

L'appoint électrique est ainsi optimisé.

L'invention concerne encore un véhicule automobile électrique comportant au moins un pack batterie pour l'alimentation d'un moteur de traction électrique et des moyens de pilotage dudit pack batterie et dudit moteur de traction électrique, et comportant un tel dispositif autonome de transformation d'énergie apte à constituer un dispositif de prolongation d'autonomie qui comporte au moins un turbogénérateur alimenté par un réservoir de carburant, qui est piloté par lesdits moyens de pilotage et qui est agencé pour le rechargement en énergie dudit au moins un pack batterie et/ou pour l'alimentation d'au moins un moteur de traction électrique.

La fiabilité d'un tel véhicule est ainsi améliorée.

De préférence, ledit véhicule automobile électrique comporte un tel dispositif autonome de transformation d'énergie, lesdits moyens de pilotage commandant lesdites deux vannes pilotées.

Plus particulièrement encore, ledit circuit de lubrification comporte, sur un circuit retour en aval dudit au moins déshuileur et en amont dudit réservoir de lubrifiant, au moins un réservoir de récupération de lubrifiant situé entre deux vannes pilotées et agencé pour récupérer ledit lubrifiant par gravité sous pression, et lesdits moyens de pilotage commandent lesdites deux vannes pilotées.

L'intégration du circuit de lubrification aux autres circuits du véhicule est alors très simple.

L'invention sera davantage détaillée par la description de modes de réalisation non limitatifs, et sur la base des figures annexées illustrant des variantes de l'invention, dans lesquelles :

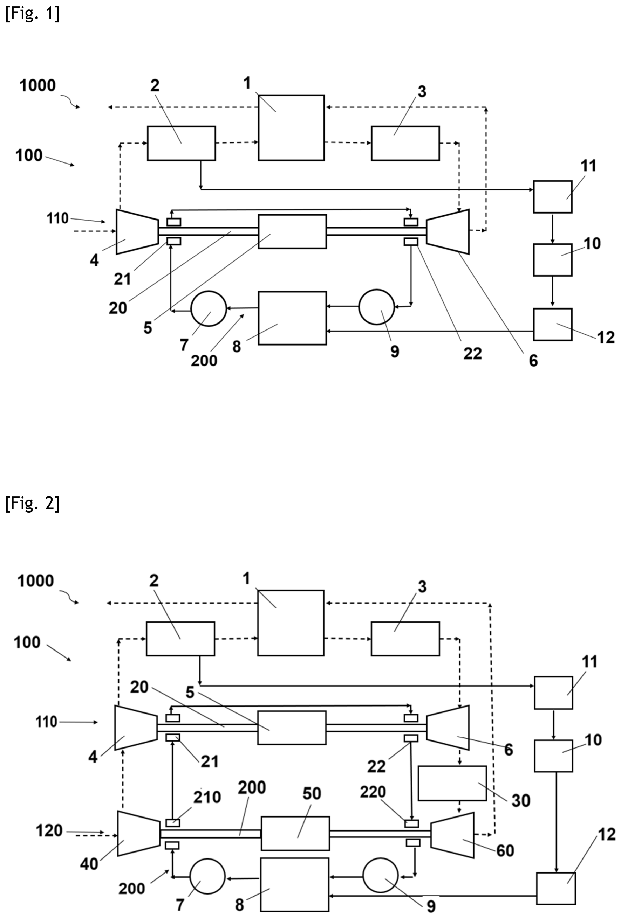

- [Fig.1] illustre schématiquement un dispositif autonome de transformation d'énergie selon une première variante de l'invention, comportant un turbogénérateur à turbine à gaz, avec une unique première turbomachine, comportant classiquement un compresseur et une turbine sur un même arbre, ici entraînant une machine électrique; le circuit des gaz est représenté en trait interrompu : un flux de gaz amont traverse le compresseur, le flux de gaz comprimé traverse un déshuileur selon l'invention avant son passage par un récupérateur de chaleur et son entrée dans une chambre de combustion permettant l'entraînement de la turbine ; le circuit de lubrification est représenté en trait fort : depuis un réservoir de lubrification, une pompe de lubrification dirige le lubrifiant vers un palier avant de support de l'arbre au niveau du compresseur, et vers un palier arrière de support de l'arbre au niveau de la première turbine, puis le lubrifiant est ramené par une pompe de retour au réservoir de lubrifiant ; dans un agencement propre à l'invention, le circuit de lubrification comporte, en aval du déshuileur, un réservoir de récupération de lubrifiant encadré par deux vannes pilotées ;
- [Fig.2] illustre schématiquement, de façon similaire à [Fig.1], un turbogénérateur à turbine à gaz, cette fois à double étage, l'étage haute pression est celui de [Fig.1], alimenté par une deuxième turbomachine basse pression en partie inférieure de la figure, le compresseur basse pression alimente le compresseur haute pression, et la turbine haute pression alimente une deuxième chambre de combustion pour l'entraînement de la turbine basse pression ;

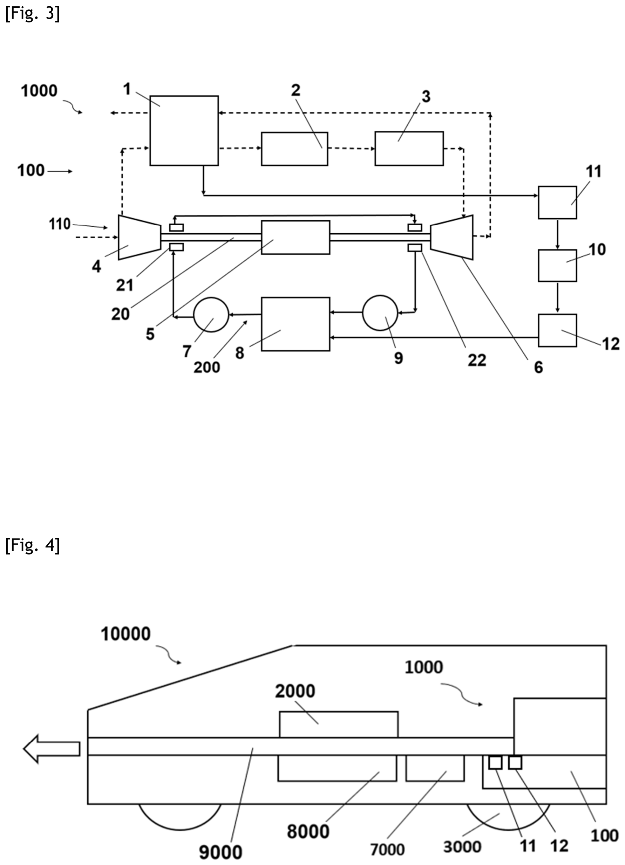

- [Fig.3] illustre schématiquement, de façon similaire à [Fig.1], une deuxième variante de l'invention, où le déshuileur est intercalé entre le récupérateur de chaleur et la chambre de combustion ;
- Fig.4] illustre schématiquement un véhicule automobile électrique comportant un pack batterie pour l'alimentation d'un moteur de traction électrique, et des moyens de pilotage, et comportant un tel dispositif autonome de transformation d'énergie constituant un dispositif de prolongation d'autonomie.

L'invention porte plus particulièrement sur l'intégration d'au moins un déshuileur dans un système de turbogénérateurs, notamment pour l'automobile.

L'invention concerne ainsi les turbogénérateurs, les turbines à gaz, les micro-turbines, fonctionnant selon un cycle Brayton, un cycle turbine à gaz, ou de type IRReGT (Intercooled recuperative reheat turbogenerator) c'est-à-dire à turbogénérateur à récupération et à refroidissement intermédiaire et réchauffe intermédiaire. Il s'agit notamment de dominer la stratégie de commande, les phases de démarrage, et d'assurer des stratégies de limitation des risques de condensation du carburant lors des phases de démarrage à froid.

L'invention est basée sur l'intégration d'au moins un organe de type déshuileur dans le turbogénérateur. La position de ce déshuileur est choisie, selon différentes variantes, de façon à limiter son impact sur le fonctionnement du turbogénérateur, tout en assurant un bon retour de l'huile au réservoir, et le maintien d'un niveau d'huile stable dans ce réservoir.

Cette architecture permet de capter et de canaliser les éventuelles fuites d'huile dans la veine d'air dans un circuit modifié permettant de séparer l'air et l'huile afin d'éviter les combustions incontrôlées dans les chambres de combustion.

Le véhicule électrique est équipé d'un système de prolongation d'autonomie de type turbogénératrice lui permettant d'augmenter son autonomie en générant de l'électricité à partir d'une réaction catalytique et d'au moins une machine électrique couplée aux turbocompresseurs. Le principe est applicable pour un ou plusieurs étages (deux étages ou plus).

Un cas particulier avantageux concerne une turbogénératrice à deux étages de compression, basse pression et haute pression, réalisée avec deux turbogénérateurs. Dans cet exemple non limitatif, la prolongation d'autonomie se fait en générant de l'électricité avec les machines électriques des turbogénérateurs. Les turbines de ces turbogénérateurs sont alimentées en enthalpie à haute température grâce à la production de gaz chauds dans les chambres catalytiques. Ces gaz chauds sont ensuite réemployés dans un récupérateur afin de réchauffer les gaz sortant du deuxième étage de compression (les gaz frais) pour limiter la quantité de carburant à injecter pour générer la température souhaitée en sortie de la chambre catalytique haute pression. Ce système intègre un récupérateur, qui est un échangeur thermique essentiellement basé sur les échanges convectifs.

L'invention propose d'ajouter un déshuileur sur le circuit d'air d'admission, ou bien, dans une première variante, entre, d'une part la sortie du compresseur le plus proche du récupérateur, soit le compresseur haute pression dans le cas du système avec double étage, et d'autre part l'entrée du récupérateur, ou bien, dans une deuxième variante, entre d'une part la sortie du récupérateur et d'autre part l'entrée de la chambre de combustion, afin de décanter d'éventuels résidus d'huile en provenance des turbogénérateurs et de les ramener au réservoir d'huile.

On rappelle que la température de l'air à l'intérieur du récupérateur est assez élevée, surtout près de la sortie, ce qui risquerait de cokéfier des résidus d'huile et donc de l'obstruer. La solution qui consiste à intégrer le déshuileur au début du récupérateur (à l'intérieur) est difficilement réalisable techniquement, ce qui limite l'intérêt pratique de cette première variante.

L'innovation de l'invention réside dans l'ajout d'un déshuileur sur le circuit d'air d'admission, entre la sortie du compresseur et l'entrée du récupérateur. Ce dispositif permet de décanter d'éventuels résidus d'huile provenant de la ou des turbomachines et de les renvoyer vers le réservoir d'huile.

Pour éviter toute combustion non contrôlée liée à l'apparition de fuites d'huile dans la veine d'air, un organe de type déshuileur est ainsi intégré dans le turbogénérateur. La position de ce déshuileur est choisie de façon à limiter son impact sur le fonctionnement du turbogénérateur tout en assurant un retour de l'huile à son réservoir. Ce retour permet de maintenir un niveau quasi-constant dans le réservoir.

La première variante, qui positionne le déshuileur entre la sortie du compresseur haute pression et l'entrée du récupérateur, est la plus facile à intégrer. Cette première variante est aussi compatible avec le système à deux étages (ou davantage) de turbomachines.

En ce qui concerne le choix du déshuileur, un déshuileur de moteur thermique de série peut servir de point de départ, et si nécessaire être modifié par la suite pour être compatible avec les caractéristiques du système, ou/et pour limiter les coûts.

Naturellement, le déshuileur choisi doit être compatible avec les conditions thermodynamiques (pression et température) du système turbogénérateur.

D'autres architectures peuvent être envisagées avec un positionnement du déshuileur différent dans le système.

L'invention concerne ainsi un dispositif autonome de transformation d'énergie 1000, pour une application automobile ou encore pour une application stationnaire de production d'énergie mécanique et/ou électrique.

Ce dispositif autonome de transformation d'énergie 1000 comporte au moins un turbogénérateur 100 à turbine à gaz, qui est alimenté par un réservoir de carburant 7000.

Cet au moins un turbogénérateur 100 comporte au moins une première turbomachine 110, qui comporte elle-même un premier compresseur 4 recevant un flux gazeux amont, lequel premier compresseur 4 est entraîné par une première turbine 6 au travers d'un premier arbre 20 lubrifié, au niveau d'un premier palier avant 21 et d'un premier palier arrière 22, par un circuit de lubrification 200 ; ce premier arbre 20 est avantageusement agencé pour l'entraînement d'une première machine électrique 5.

Le premier compresseur 4 est agencé pour envoyer dans un circuit gazeux, symbolisé par un trait interrompu sur les figures, au travers d'un récupérateur de chaleur 1, un flux gazeux comprimé, vers une première chambre de combustion 3 alimentant l'amont de la première turbine 6, dont le flux gazeux en aval traverse le récupérateur de chaleur 1 avant sa sortie du au moins un turbogénérateur 100.

Le circuit de lubrification 200 comporte un réservoir de lubrifiant 8, dont le contenu est acheminé par une pompe de lubrification 7 vers un premier palier avant 21 de support du premier arbre 20 au niveau du premier compresseur 4, et vers un premier palier arrière 22 de support du premier arbre 20 au niveau de la première turbine 6. Le lubrifiant, notamment et non limitativement de l'huile, est ramené par aspiration par une pompe de retour 9 au réservoir de lubrifiant 8, dont la pression est avantageusement voisine de la pression atmosphérique, ou à la pression atmosphérique.

De façon propre à l'invention, cet au moins un turbogénérateur 100 comporte au moins un déshuileur 2, qui est intercalé sur le circuit gazeux entre le premier compresseur 4 et la première chambre de combustion 3 pour éliminer du lubrifiant introduit dans le flux gazeux, tel que visible sur [Fig.1], [Fig.2], [Fig.3].

Plus particulièrement, la première variante illustrée en [Fig.1] et [Fig.2], est celle où le turbogénérateur 100 comporte au moins un déshuileur 2 qui est intercalé sur le circuit gazeux entre le premier compresseur 4 et le récupérateur de chaleur 1.

Dans la deuxième variante illustrée en [Fig.3], le turbogénérateur 100 comporte au moins un déshuileur 2 intercalé sur le circuit gazeux entre le récupérateur de chaleur 1 et la première chambre de combustion 3.

Il est possible d'imaginer d'autres variantes encore, notamment celle où le turbogénérateur 100 comporte, à la fois, au moins un déshuileur 2 qui est intercalé sur le circuit gazeux entre le premier compresseur 4 et le récupérateur de chaleur 1, et au moins un déshuileur 2 intercalé sur le circuit gazeux entre le récupérateur de chaleur 1 et la première chambre de combustion 3.

Plus particulièrement, cet au moins un turbogénérateur 100 est à double étage, tel que visible en [Fig.2], et comporte, pour l'alimentation en flux gazeux de la au moins une première turbomachine 110, au moins une deuxième turbomachine 120 comportant un deuxième compresseur 40 recevant un flux gazeux amont et entraîné par une deuxième turbine 60 au travers d'un deuxième arbre 200 lubrifié par le circuit de lubrification 200 et agencé pour entraîner une deuxième machine électrique 50. Le deuxième compresseur 40 est agencé pour envoyer dans le premier compresseur 4 un flux gazeux comprimé. Cet au moins un turbogénérateur 100 comporte, pour l'alimentation de la deuxième turbine 60, une deuxième chambre de combustion 30 qui est située en aval de la première turbine 6 et en amont de la deuxième turbine 60. Et le circuit de lubrification 200 est alors agencé pour lubrifier, en aval de la pompe de lubrification 7, un deuxième palier avant 210 de support du deuxième arbre 200 au niveau du deuxième compresseur 40, et, en aval de la première turbine 6 et de la deuxième chambre de combustion 30, un deuxième palier arrière 220 de support du deuxième arbre 200 en amont de la pompe de retour 9.

Plus particulièrement, le circuit de lubrification 200 comporte, sur un circuit retour en aval du au moins un déshuileur 2 et en amont du réservoir de lubrifiant 8, au moins un réservoir de récupération de lubrifiant 10 qui est situé entre deux vannes pilotées 11, 12, et qui est agencé pour récupérer le lubrifiant par gravité sous pression (par exemple et non limitativement de l'ordre de 7 bar).

Plus particulièrement, chaque chambre de combustion 3, 30, que comporte cet au moins un turbogénérateur 100 est une chambre de combustion catalytique. L'intérêt d'un déshuilage efficace est manifeste, en raison du coût élevé de telles chambres catalytiques.

Plus particulièrement, au moins un arbre 20, 200, d'une turbomachine 110, 120, que comporte cet au moins un turbogénérateur 100 entraîne une machine électrique 5, 50, qui est agencée pour recharger un pack batterie 2000 et/ou alimenter un moteur de traction électrique 8000, en particulier pour entraîner un train de roulement 3000.

Plus particulièrement, chaque arbre 20, 200, d'une turbomachine 110, 120, que comporte cet au moins un turbogénérateur 100 entraîne une telle machine électrique 5, 50, agencée pour recharger un pack batterie 2000 et/ou alimenter un moteur de traction électrique 8000.

L'invention concerne encore un véhicule automobile électrique 10000 comportant au moins un pack batterie 2000 pour l'alimentation d'un moteur de traction électrique 8000, et comportant des moyens de pilotage 9000 pour le pilotage du pack batterie 2000 et du moteur de traction électrique 8000, ce véhicule automobile électrique 10000 comportant un tel dispositif autonome de transformation d'énergie 1000, apte à constituer un dispositif de prolongation d'autonomie qui comporte au moins un turbogénérateur 100 alimenté par un réservoir de carburant 7000, qui est piloté par les moyens de pilotage 9000 et qui est agencé pour le rechargement en énergie du au moins un pack batterie 2000 et/ou pour l'alimentation d'au moins un moteur de traction électrique.

Plus particulièrement, ces moyens de pilotage 9000 commandent les deux vannes pilotées 11, 12, dans l'exécution avantageuse où un réservoir de récupération de lubrifiant 10 est encadré par de telles vannes.

En somme, le dispositif selon l'invention constitue une solution innovante pour la réchauffe, et permet de fiabiliser le contrôle et le fonctionnement du système, en évitant la combustion incontrôlée de l'huile résiduelle pouvant s'accumuler dans les chambres de combustion, notamment des chambres catalytiques, ce qui peut les endommager. L'intérêt économique majeur est d'éviter de devoir mettre en jeu la garantie constructeur auprès des utilisateurs sur des composants aussi coûteux que des chambres catalytiques.

La proposition d'un système fiable permet de conforter l'image de marque du fabricant, et de pérenniser les ventes des véhicules équipés de ce système.

Enfin, ce dispositif permet donc de sécuriser le système en évitant les risques d'incendie liés à l'éventuelle combustion incontrôlée de l'huile dans les chambres catalytiques.

L'invention possède un fort intérêt technique. En effet, elle permet de proposer un convertisseur à forte densité de puissance et de faible volume, permettant de s'intégrer facilement dans un véhicule électrique ou hybride pour hybrider sa batterie et proposer un véhicule à forte autonomie, faible coût et faible impact environnemental.

L'invention permet de mettre en œuvre différentes stratégies de fonctionnement pour contrôler la machine en associant de façon bien particulière les grandeurs commandables et les grandeurs mesurables.

L'invention peut être développée avec un turbogénérateur comportant au moins un étage supplémentaire.

L'invention, telle que décrite, est une solution à coût de production maîtrisé permettant d'hybrider la batterie d'un véhicule électrique ou hybride, offrant une longue autonomie, et notamment avec un carburant bio-fuel à faible impact environnemental. Cette solution permet de garder les avantages des véhicules électriques : agrément de conduite, maintenance réduite, faible niveau de bruit, tout en augmentant l'autonomie et en réduisant le coût.

## Revendications

1. Dispositif autonome de transformation d'énergie (1000) comportant au moins un turbogénérateur (100) à turbine à gaz alimenté par un réservoir de carburant (7000), ledit au moins un turbogénérateur (100) comportant au moins une première turbomachine (110) comportant un premier compresseur (4) recevant un flux gazeux amont et entraîné par une première turbine (6) au travers d'un premier arbre (20) lubrifié par un circuit de lubrification (200) et agencé pour l'entraînement d'une première machine électrique (5), ledit premier compresseur (4) étant agencé pour envoyer dans un circuit gazeux, au travers d'un récupérateur de chaleur (1), un flux gazeux comprimé, vers une première chambre de combustion (3) alimentant l'amont de ladite première turbine (6) dont le flux gazeux en aval traverse ledit récupérateur de chaleur (1) avant sa sortie dudit au moins un turbogénérateur (100), ledit circuit de lubrification (200) comportant un réservoir de lubrifiant (8) dont le contenu est acheminé par une pompe de lubrification (7) vers un premier palier avant (21) de support dudit premier arbre (20) au niveau dudit premier compresseur (4) et vers un premier palier arrière (22) de support dudit premier arbre (20) au niveau de ladite première turbine (6), puis ramené par une pompe de retour (9) audit réservoir de lubrifiant (8), **caractérisé en ce que** ledit au moins un turbogénérateur (100) comporte au moins un déshuileur (2) intercalé sur ledit circuit gazeux entre ledit premier compresseur (4) et ladite première chambre de combustion (3) pour éliminer du lubrifiant introduit dans le flux gazeux.

2. Dispositif autonome de transformation d'énergie (1000) selon la revendication 1, **caractérisé en ce que** ledit au moins un turbogénérateur (100) comporte au moins un déshuileur (2) intercalé sur ledit circuit gazeux entre ledit premier compresseur (4) et ledit récupérateur de chaleur (1).

3. Dispositif autonome de transformation d'énergie (1000) selon la revendication 1 ou 2, **caractérisé en ce que** ledit au moins un turbogénérateur (100) comporte au moins un déshuileur (2) intercalé sur ledit circuit gazeux entre ledit récupérateur de chaleur (1) et ladite première chambre de combustion (3).

4. Dispositif autonome de transformation d'énergie (1000) selon l'une des revendications 1 à 3, **caractérisé en ce que** ledit au moins un turbogénérateur (100) comporte, pour l'alimentation de ladite au moins une première turbomachine (110) en flux gazeux, au moins une deuxième turbomachine (120) comportant un deuxième compresseur (40) recevant un flux gazeux amont et entraîné par une deuxième turbine (60) au travers d'un deuxième arbre (200) lubrifié par ledit circuit de lubrification (200) et agencé pour entraîner une deuxième machine électrique (50), ledit deuxième compresseur (40) étant agencé pour envoyer dans ledit premier compresseur (4) un flux gazeux comprimé, **en ce que** ledit au moins un turbogénérateur (100) comporte, pour l'alimentation de ladite deuxième turbine (60), une deuxième chambre de combustion (30) située en aval de ladite première turbine (6) et en amont de ladite deuxième turbine (60), et **en ce que** ledit circuit de lubrification (200) est agencé pour lubrifier, en aval de ladite pompe de lubrification (7), un deuxième palier avant (210) de support dudit deuxième arbre (200) au niveau dudit deuxième compresseur (40), et, en aval de ladite première turbine (6) et de ladite deuxième chambre de combustion (30), un deuxième palier arrière (220) de support dudit deuxième arbre (200) en amont de ladite pompe de retour (9).

5. Dispositif autonome de transformation d'énergie (1000) selon l'une des revendications 1 à 4, **caractérisé en ce que** ledit circuit de lubrification (200) comporte, sur un circuit retour en aval dudit au moins un déshuileur (2) et en amont dudit réservoir de lubrifiant (8), au moins un réservoir de récupération de lubrifiant (10) situé entre deux vannes pilotées (11 ; 12) et agencé pour récupérer ledit lubrifiant par gravité sous pression.

6. Dispositif autonome de transformation d'énergie (1000) selon l'une des revendications 1 à 5, **caractérisé en ce que** chaque chambre de combustion (3; 30) que comporte ledit au moins un turbogénérateur (100) est une chambre de combustion catalytique.

7. Dispositif autonome de transformation d'énergie (1000) selon l'une des revendications 1 à 6, **caractérisé en ce que** au moins un arbre (20 ; 200) d'une turbomachine (110 ; 120) que comporte ledit au moins un turbogénérateur (100) entraîne une machine électrique (5 ; 50) agencée pour recharger un pack batterie (2000) et/ou alimenter un moteur de traction électrique (8000).

8. Dispositif autonome de transformation d'énergie (1000) selon la revendication 7, **caractérisé en ce que** chaque arbre (20 ; 200) d'une turbomachine (110 ; 120) que comporte ledit au moins un turbogénérateur (100) entraîne une machine électrique (5 ; 50) agencée pour recharger un pack batterie (2000) et/ou alimenter un moteur de traction électrique (8000).

9. Véhicule automobile électrique (10000) comportant au moins un pack batterie (2000) pour l'alimentation d'un moteur de traction électrique (8000) et des moyens de pilotage (9000) dudit pack batterie (2000) et dudit moteur de traction électrique (8000), et comportant un dispositif autonome de transformation d'énergie (1000) selon l'une des revendications 1 à 8 apte à constituer un dispositif de prolongation d'autonomie qui comporte au moins un turbogénérateur (100) alimenté par un réservoir de carburant (7000), qui est piloté par lesdits moyens de pilotage (9000) et qui est agencé pour le rechargement en énergie dudit au moins un pack batterie (2000) et/ou pour l'alimentation d'au moins un moteur de traction électrique (8000).

10. Véhicule automobile électrique (10000) selon la revendication 9, comportant un dispositif autonome de transformation d'énergie (1000) selon la revendication 5, **caractérisé en ce que** lesdits moyens de pilotage (9000) commandent lesdites deux vannes pilotées (11 ; 12).
